# EUROPEAN PATENT SPECIFICATION

(11) **EP 0 410 160 B1**
(45) Date of publication and mention of the grant of the patent: **13.09.1995**
(21) Application number: 90112510.4
(22) Date of filing: 29.06.1990
(51) Int. Cl.: G02B 5/20

(54) **Optical filter**
Optisches Filter
Filtre optique

(30) Priority: 25.07.1989 JP 87250/89
(43) Date of publication of application: 30.01.1991
(73) Proprietor: HORIBA, LTD., Minami-ku Kyoto (JP)
(72) Inventor: Ishida, Masahiko, Nagaokakyo-City, Kyoto (JP); Takada, Syuji, Uji-City, Kyoto (JP); Ohnishi, Toshikazu, Kurita-gun, Shiga-prefecture (JP)
(74) Representative: TER MEER STEINMEISTER & PARTNER GbR

(56) References cited:
- CH-A- 583 912
- DE-A- 3 302 565
- FR-A- 2 037 986
- PATENT ABSTRACTS OF JAPAN, vol. 10, no. 64 (P-436) 14 March 1986 & JP A 60205502
- PATENT ABSTRACTS OF JAPAN, vol. 12, no. 470 (P-798) 9 December 1988 & JP A 63189802
- PATENT ABSTRACTS OF JAPAN, vol. 12, no. 280 (P-739) 2 August 1988 & JP A 63061202

## Description

The present invention relates to an optical filter used for example in an air-to-fuel ratio meter.

DE-A-33 02 565 discloses an optical filter which, in accordance with the preamble of claim 1, comprises a substrate formed of a material transmissible for infrared rays and a band pass layer formed on one side of the substrate and passing a predetermined wavelength band of infrared rays.

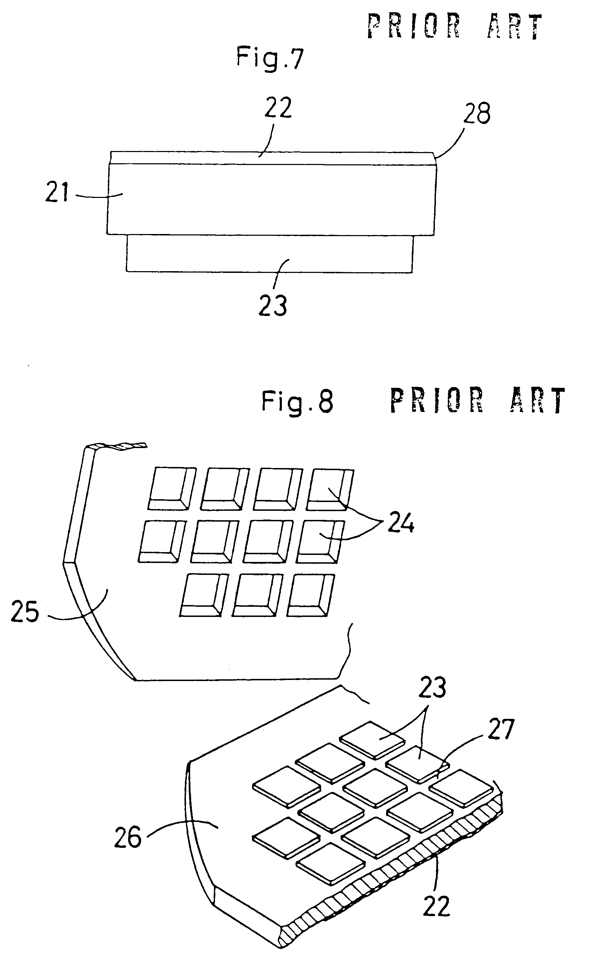

Another example of a conventional optical filter of this type is shown in figure 7.

A substrate 21 formed of materials such as silicon (Si) and silica transmissible for infrared rays is provided on one side thereof with a band pass layer 22 (hereinafter referred to as a BP layer) passing an appropriate wavelength band of infrared rays, and on the other side thereof with a short/long cutting layer 23 (hereinafter referred to as an SLC layer) cutting a short wavelength band and a long wavelength band of infrared rays in order to remove noise ingedrients outside of the transmission band of said BP layer. The BP layer 22 and the SLC layer 23 are formed of multi-layer films comprising germanium (Ge) and silicon monoxide (SiO) or the like.

The BP layer 22 is thinly formed all over the surface of the substrate 21, and the SLC layer 23 is considerably thicker than the BP layer 22 and has a size slightly smaller than the substrate 21 so that the whole peripheral portion of the substrate 21 is exposed.

In order to produce this optical filter, as shown in figure 8, a mask plate 25 provided with a plurality of perforated portions 24 formed at intervals corresponding to the SLC layers 23 is overlaid on one side of a substrate 26 formed of Si or the like, and then two kinds of material are successively deposited on the substrate 26 by vacuum vapor deposition coating to form a plurality of SLC layers 23 arranged side by side with cutting intervals 27 formed therebetween. On the other hand, two kinds of material are successively deposited by vacuum vapor deposition coating all over the surface of the other side of the substrate 26 to form the BP layer 22. Finally, the substrate 26 and the BP layer 22 are cut at said cutting intervals 27.

The cutting intervals 27 are provided between the SLC layers 23 for the following reason. If the SLC layers would be cut together with the substrate 26, tipping would almost always occur due to the increased thickness of the SLC layers, and this tipping would lead to the leakage of light. Accordingly, the cutting intervals 27 are formed between the SLC layers in advance to make the cutting of the SLC layers 23 unnecessary when the substrate 26 is cut, so that the tipping is prevented.

On the other hand, the BP layer 22 is formed all over the surface of the substrate 26 because the BP layer 22 is considerably thinner than the SLC layers 23 and the tipping occurs comparatively rarely upon cutting. Accordingly, since the BP layer 22 is formed all over the surface of the substrate 26 and is cut simultaneously with the substrate 26, the individual BP layers have a larger width than the SLC layers 23. Thus, it is assured that all SLC layers 23 are overlaid completely by the BP layers 22, thereby preventing the problem of leakage of light resulting from incomplete overlapping of the SLC layers 23 with the BP layers 22 in both the case where the substrate 26 is formed of opaque materials such as Si and the case where the substrate 26 is formed of transparent materials such as silica.

However, since the BP layer 22 is cut together with the substrate 26, there is a possibility that tipping 28 (refer to figure 7) occurs on the BP layer 22 although in a small quantity.

If the substrate 26 is formed of transparent materials such as silica and sapphire, it is possible, in principle, to avoid the tipping 28 on the BP layer 22 by making the BP layers equal to the SLC layers 23 in size and position, so that cutting of the BP layer 22 becomes unnecessary. This is possible because the transparency of the substrate permits to confirm whether the positions of the individual BP layers match with the positions of the SLC layers 23 when these layers are formed on the substrate.

However, if the BP layers 22 and the SLC layers 23 are equal to each other in size, there is a possibility that, for example, they are slightly shifted in position and/or different in size so that unoverlaid portions are brought about through which the light is leaked. In the case where the substrate 26 is formed of opaque materials such as Si, it is difficult to confirm the positions of the BP layers 22 and the SLC layers 23, so that the positional shift between the BP layers 22 and the SLC layers 23 is apt to occur more frequently.

In a case where the area of the SLC layers 23 and the BP layers 22 is comparatively large, the leakage of light can be prevented by making the light incident only upon the central portions of these layers. However, with an optical filter in which the areas of the BP layer 22 and the SLC layer 23 are comparatively small, it is difficult to surely prevent said leakage of light according to circumstances.

Accordingly, in a case where a detector for simultaneously measuring three ingredients is formed by incorporating four optical filters having the above described construction in one vessel made of metal or the like (one of the optical filters serving as a standard), and, for example, leakage of light occurs in either of said optical filters, the interferential value is increased and thus a highly accurate measurement of said three ingredients cannot be achieved. When such a leakage of light is found, the exchange of the optical filter takes much time for opening the vessel and the like, and it is difficult to repeatedly use the vessel, so that drawbacks such as increased costs or the like are encountered.

In view of these problems, an optical filter having no possibility of leakage of light has been desired.

Accordingly, it is an object of the present invention to provide an optical filter in which no tipping is found on either the BP layer or the SLC layer and leakage of light due to positional mismatch between the BP layer and the SLC layer is safely avoided, regardless of whether the substrate of the filter is transparent or not.

This object is achieved by an optical filter having the features specified in claim 1. A method for manufacturing the optical filter according to the invention is specified in claim 5. Further developments of the invention are indicated in the dependent claims.

According to an important feature of the invention, the size of both the BP layer and the SLC layer is slightly less than that of the substrate, so that an exposed portion is provided all over the periphery of the substrate, and all surface of the peripheral portion of the BP layer and the SLC layer is covered with a mask formed of a material reflecting infrared rays.

The BP layer and the SLC layer may be congruent with each other and so arranged that they coincide in position. Alternatively, these layers may be arranged in positions slightly shifted relative to each other and/or may have slightly different areas.

Said mask may be formed extending from the peripheral portion of the BP layer and the SLC layer to the side surface of the substrate. If the side surface of the substrate is also covered with the mask in such a manner, the leakage of light from the side surface of the substrate can be suitably prevented.

The mask is formed of materials such as Cr, Ni and Al, reflecting infrared rays. Preferably, an Au layer is overlaid on the Cr layer in order to improve the strength of the mask.

When, in the production of optical filters according to the invention, a plurality of BP layers and SLC layers are formed on a common substrate and the substrate is cut afterwards, neither the BP layers nor the SLC layers need to be cut, and thus, the tipping resulting from the cutting of the BP layers and the SLC layers is avoided.

Since the peripheral portion of the BP layer and the SLC layer is covered with the mask formed of a material reflecting infrared rays all over the surface thereof, even a shift in position and/or a difference in size between the BP layer and the SLC layer does not result in a leakage of light because the shift in position and the difference in dimension can be absorbed by the width of the mask.

Preferred embodiments of the invention will be described below in conjunction with the drawings in which
- Fig. 1: is a sectional front view of an optical filter according to a first embodiment;
- Fig. 2: is a partially cut plan view of the filter shown in figure 1;
- Fig. 3: is a sectional front view of the filter in a production step in which a mask is formed;
- Fig. 4: is a sectional front view of an optical filter according to a second embodiment;
- Fig. 5: is a diagram showing a substrate material for the filter according to the secod embodiment;
- Fig. 6: is a sectional front view of the filter in a production step in which a mask is formed;
- Fig. 7: is a front view of conventinal optical filter; and
- Fig. 8: is a perspective view showing a mask plate and a substrate material for the conventional filter.

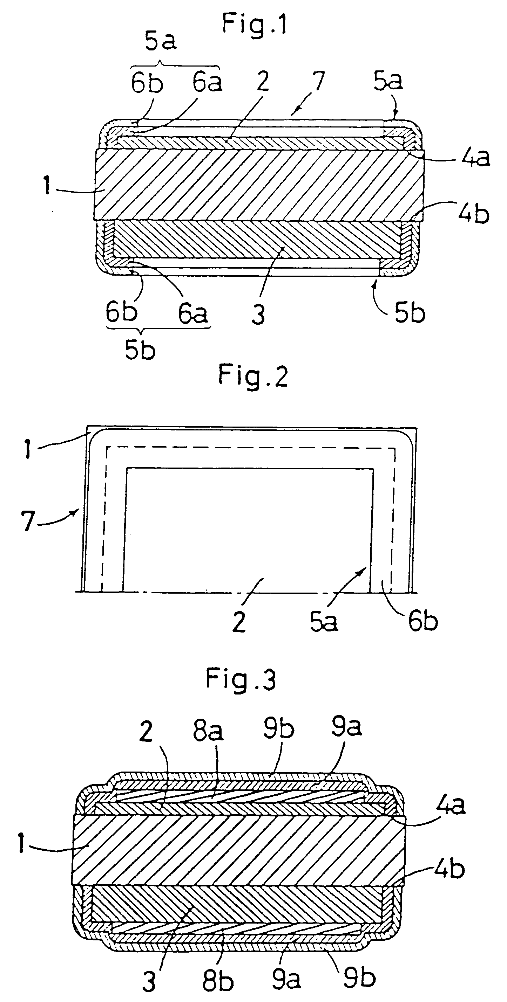

Referring to figures 1 to 3, an optical filter 7 comprises a substrate 1 which is formed of a material such as silicon (Si), silica, sapphire, or barium fluoride and is transmissible to infrared rays, a BP layer formed on one side of the substrate and an SLC layer 3 formed on the other side of the substrate. The BP layer and the SLC layer are each formed of a multi-layer film comprising germanium and silicon monoxide (SiO) deposited by vacuum vapor deposition coating. Both the BP layer 2 and the SLC layer 3 have dimensions slightly smaller than those of the substrate 1, so that exposed portions 4a,4b are formed all over the periphery on both sides of the substrate 1.

Masks 5a,5b reflecting infrared rays are formed on the respective peripheral portions of the BP layer 2, the SLC layer 3 and the exposed portions 4a,4b of the substrate 1. The masks comprise a Cr layer 6a overlaid by an Au layer 6b.

The BP layer 2 and the SLC layer 3 of the optical filter are formed on the substrate 1 for example by the conventional masking and vapor deposition coating method using a mask plate or the like, as is shown in figure 8.

In order to form the masks 5a,5b, preferably, resist coatings 8a,8b soluble in solvents such as acetone are formed on the BP layer 2 and SLC layer 3 with the exception of those portions on which the masks 5a,5b are to be formed, and Cr and Au are successively deposited on the resist coatings 8a,8b, on the portions of the BP layer 2 and the SLC layer 3 exposed around the resit coatings 8a,8b and on the exposed portions 4a,4b to form mask layers 9a,9b. Preferably, a vapor deposition coating method and sputtering method are used for forming said Cr and Au mask layers 9a,9b. A lift-off photolitho, said resist coatings 8a,8b and the portions of the mask layers 9a,9b overlaid on the resist coatings 8a,8b are removed by means of solvents to form the masks 5a,5b on the respective peripheral portions of the BP layer 2 and the SLC layer 3, as is shown in figure 3.

In the optical filter 7 described above, the exposed portions 4a,4b of the substrate 1 are formed all over the respective peripheries of the BP layer 2 and the SLC layer 3, so that no part of the comparatively thin BP layer 2 nor of the thicker SLC layer 3 are cut when the substrate 1 is cut by a die sink or the like. Thus, no tipping is brought about on the BP layer 2 and the SLC layer 3.

The whole surface of the peripheries of the BP layer 2 and the SLC layer 3 are covered with the masks 5a,5b reflecting infrared rays, so that, when a shift between the BP layer 2 and the SLC layer 3 is brought about when forming these layers, this shift is absorbed by the width of the masks 5a,5b. Since the masks reflect infrared rays, the leakage of light resulting from such a positional shift is avoided.

Accordingly, the positional setting of the BP layer 2 and the SLC layer 3 relative to the substrate 1 is easy and not only transparent materials such as silica or sapphire, but also opaque materials such as Si may be used for forming the substrate 1.

As no tipping is brought about on the BP layer 2 nor on the SLC layer 3, when the substrate 1 is cut, the leakage of light resulting from such tipping is also avoided. Accordingly, an optical filter superior in reliability and with reduced areas of the BP layer and the SLC layer can be easily produced.

Since the Cr layer 6a of the masks 5a,5b is overlaid by the Au layer 6b, the Cr layer is protected against frictional damage and is able to surely reflect infrared rays.

Accordingly, when, for example, a detector (e.g. for use in a high-speed air-to-fuel ratio meter) measuring three ingredients (HC, CO₂, CO) at the same time is formed by incorporating four optical filters in a common metal vessel, there is no possiblity that leakage of light is brought about in the respective optical filters, so that a highly reliabe detector capable of measuring said respective ingredients with high accuracy can be produced.

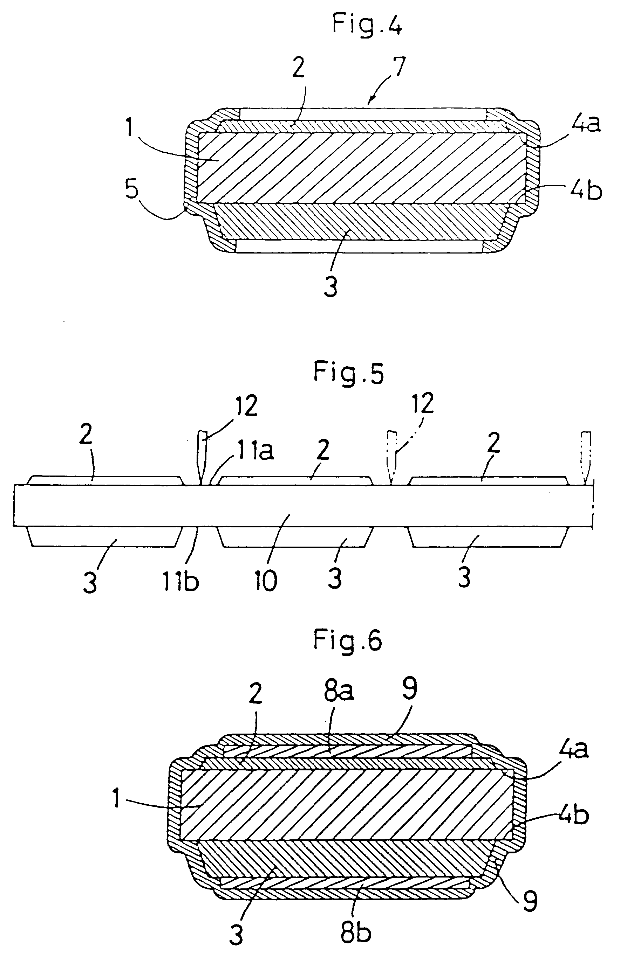

In a second embodiment shown in figures 4 to 6, the substrate 1, the BP layer 2 and the SLC layer 3 of the optical filter 7 have a structure similar to that described in conjunction with figure 1. In this embodiment, a mask 5 reflecting infrared rays is arranged to extend from the respective peripheral portions of the BP layer 2 and the SLC layer 3 over the exposed portions 4a,4b of the substrate 1 and the whole surface of the sides of the substrate 1.

In this embodiment, the mask 5 is formed of an electroless plating layer such as Ni.

Figure 5 illustrates a manufacturing step in the production of a plurality of optical filters 7. A plurality of BP layers 2 are formed on one side of a substrate material 10 and a plurality of SLC layers 3 are formed on the other side of the substrate material with cutting intervals 11a,11b respectively formed between the BP layers and the SLC layers, so that they almost correspond to each other in position. The substrate material 10 is cut at middle portions of said cutting intervals 11a,11b by means of dies 12 to form the substrates 1.

In order to form the mask 5, as is shown in figure 6, resist coatings 8a,8b soluble in solvents such as acetone are formed on the respective BP layers 2 and SLC layers 3 with the exception of those portions on which the mask 5 is to be formed. The mask layer 9 formed of Ni is formed on said resit coatings 8a,8b, the portions of the BP layer 2 and the SLC layer 3 exposed around the resist coatings 8a,8b and on the exposed portions 4a,4b and the side surfaces of the substrate 1 by an electroless plating method, for example the dipping method. The portions of the mask layer 9 overlaid on the resist coatings 8a,8b are removed by means of solvents together with the resist coatings 8a,8b to form the mask 5 on the respective peripheral portions of the BP layer 2 and the SLC layer 3, the exposed portions 4a,4b and the side surfaces of the substrate 1.

Like in the first embodiment, the dimensions of the BP layer 2 and the SLC layer 3 are slightly smaller than those of the substrate 1, so that the exposed portions 4a,4b are formed all over the peripheral portion of the substrate 1. As a consequence, no tipping is brought about, neither on the BP layer 2 nor on the SLC layer 3, when the substrate matrial 10 is cut by means of the dies 12, and the possibility of leakage of light resulting from the tipping is eliminated.

In addition, since all of the peripheral portion of the BP layer 2 and the SLC layer 3 is coated with the mask 5 reflecting infrared rays, there is no possibility of leakage of light resulting from a positional shift or the like between the BP layer 2 and the SLC layer 3.

Since the mask 5 covers also all the side surfaces of the substrate 1, leakage of light from the side surfaces of the substrate 1 is also prevented.

Accordingly, the optical filter with the construction described above can be easily produced and is superior in reliability even when the areas of the BP layer 2 and the SLC layer 3 is reduced and the incident light is not confined to the central portion thereof.

## Claims

1. An optical filter (7) comprising a substrate (1) formed of a material transparent to infrared rays, a band pass layer (2) formed on one side of the substrate and passing a predetermined wavelength band of infrared rays, **characterized** in that a short/long cutting layer (3) which cuts a short wavelength band and a long wavelength band of infrared rays is formed on the other side of said substrate; in that the area of both said band pass layer (2) and said short/long cutting layer (3) is slightly less than that of the substrate (1) so that exposed portions (4a,4b) are formed all over the peripheral portion of the substrate; and in that all the surface of the peripheral portions of the band pass layer and the short/long cutting layer is covered with a mask (5a,5b;5) formed of a material reflecting infrared rays.

2. An optical filter as set forth in claim 1, wherein said mask (5) is formed extending from the peripheral portions of the band pass layer (2) and the short/long cutting layer (3) to the side surfaces of the substrate (1).

3. An optical filter as set forth in claim 1 or 2, wherein said mask (5a,5b) is formed by overlaying a protective layer (6b) over a layer (6a) of a material reflecting infrared rays.

4. An optical filter as set forth in claim 3, wherein said protective layer (6b) is formed of Au and said material reflecting infrared rays is Cr.

5. A method of manufacturing an optical filter (7) having a substrate (1), a band pass layer (2) formed on one side of said substrate and passing a predetermined wavelength band of infrared rays and a short/long cutting layer (3) which cuts a short wavelength band and a long wavelength band of infrared rays formed on the other side of said substrate, comprising the steps of
a) forming a plurality of portions of band pass layers (2) on one side of a substrate material (10) with cutting intervals (11a) formed between the respective portions of band pass layers,
b) forming a plurality of portions of short/long cutting layers (3) on the other side of the substrate material (10) with cutting intervals (11b) formed between the respective portions of short/long cutting layers (3), said cutting intervals (11a,11b) on the opposite sides of the substrate material being substantially opposed to each other,
c) cutting said substrate material in the middle portions of said cutting intervals to form a plurality of optical filters, and
d) coating the peripheral edge portions of said band pass layers and said short/long cutting layers with a mask (5a,5b;5) of a material reflecting infrared rays.

6. A method as set forth in claim 5, wherein resist coatings (8a,8b) are applied to the central portions of said band pass layer 2 and the short/long cutting layer (3) prior to the execution of step d),and wherein the step d) includes a step of coating the entire surfaces on both sides of the substrate (1) with a material (9a,9b;9) forming said mask, and a step of removing said resist coatings and the mask material overlaid thereon by means of a solvent.

7. A method as set forth in claim 6, wherein a continuous layer of said mask material (9) is applied to the two major surfaces and all side surfaces of the optical filter element in said coating step.

## Patentansprüche

1. Optisches Filter (7) mit einem Substrat (1) aus einem für Infrarotstrahlung durchlässigen Material, einer Bandpaßschicht (2), die auf einer Seite des Substrats ausgebildet ist und für Infrarotstrahlung eines vorgegebenen Wellenlängenbandes durchlässig ist, dadurch **gekennzeichnet**, daß eine Kurz/Lang-Sperrschicht (3), die ein kurzes Wellenlängenband und ein langes Wellenlängenband der Infrarotstrahlung abschneidet, auf der anderen Seite des Substrats ausgebildet ist, das die Fläche sowohl der Bandpaßschicht (2) als auch der Kurz/Lang-Sperrschicht (3) etwas kleiner ist als die des Substrats (1), so daß freiliegende Bereiche (4a, 4b) auf dem gesamten Randbereich des Substrats gebildet werden, und daß die gesamte Oberfläche der Randbereiche der Bandpaßschicht und der Kurz/Lang-Sperrschicht mit einer Maske (5a, 5b; 5) aus einem Infrarotstrahlung reflektierenden Material bedeckt ist.

2. Optisches Filter nach Anspruch 1, bei dem die Maske (5) so ausgebildet ist, daß sie sich von den Randbereichen der Bandpaßschicht (2) und der Kurz/Lang-Sperrschicht (3) zu den seitlichen Oberflächen des Substrats (1) erstreckt.

3. Optisches Filter nach Anspruch 1 oder 2, bei dem die Maske (5a, 5b) durch Überlagerung einer Schutzschicht (6b) auf einer Schicht (6a) aus einem Infrarotstrahlung reflektierenden Material gebildet wird.

4. Optisches Filter nach Anspruch 3, bei dem die Schutzschicht (6b) aus Au besteht und das Infrarotstrahlung reflektierende Material Cr ist.

5. Verfahren zur Herstellung eines optisches Filters (7) mit einem Substrat (1), einer Bandpaßschicht (2), die auf einer Seite des Substrats ausgebildet ist und für Infrarotstrahlung eines vorgegebenen Wellenlängenbandes durchlässig ist, und einer Kurz/Lang-Sperrschicht (3), die ein kurzes Wellenlängenband und ein langes Wellenlängenband der Infrarotstrahlung abschneidet und auf der anderen Seite des Substrats ausgebildet ist, mit den Schritten:
a) Bilden mehrerer Bereiche von Bandpaßschichten (2) auf einer Seite eines Substratmaterials (10) mit zwischen den jeweiligen Bereichen der Bandpaßschichten gebildeten Schneidlücken (11a),
b) Bilden mehrerer Bereiche von Kurz/Lang-Sperrschichten (3) auf der anderen Seite des Substratmaterials (10) mit zwischen den jeweiligen Bereichen der Kurz/Lang-Sperrschichten (3) gebildeten Schneidlücken (11b), wobei die Schneidlücken (11a, 11b) auf den entgegengesetzten Seiten des Substratmaterials einander im wesentlichen gegenüberliegen,
c) Schneiden des Substratmaterials in den Mittelbereichen der Schneidlücken, um eine Vielzahl optischer Filter zu bilden, und
d) Beschichten der Umfangsrandbereiche der Bandpaßschichten und der Kurz/Lang-Sperrschichten mit einer Maske (5a, 5b; 5) aus einem Infrarotstrahlung reflektierenden Material.

6. Verfahren nach Anspruch 5, bei dem Resist-Beschichtungen (8a, 8b) vor der Ausführung des Schrittes d) auf die zentralen Bereiche der Bandpaßschicht (2) und der Kurz/Lang-Sperrschicht (3) aufgebracht werden und bei dem der Schritt d) einen Schritt der Beschichtung der gesamten Oberflächen auf beiden Seiten des Substrats (1) mit einem die Maske bildenden Material (9a, 9b; 9) und einen Schritt des Entfernens der Resist-Beschichtungen und des darauf überlagerten Maskenmaterials mit Hilfe eines Lösungsmittels umfaßt.

7. Verfahren nach Anspruch 6, bei dem in dem Beschichtungsschritt eine durchgehende Schicht des Maskenmaterials (9) auf die beiden Hauptflächen und sämtliche seitliche Oberflächen des optischen Filterelements aufgebracht wird.

## Revendications

1. Filtre optique (7) comportant un substrat (1) réalisé en un matériau transparent aux rayons infrarouges, une couche passe-bande (2) formée sur un côté du substrat et laissant passer une bande prédéterminée de longueurs d'onde de rayons infrarouges, caractérisé en ce qu'une couche de coupure ondes courbes/grandes ondes (3), qui coupe une bande de courtes longueurs d'onde et une bande de grandes longueurs d'onde de rayons infrarouges, est formée sur l'autre côté dudit substrat ; en ce que la surface de ladite couche passe-bande (2) et de ladite couche de coupure ondes courtes/grandes ondes (3) est légèrement inférieure à celle du substrat (1) de sorte que des parties à nu (4a, 4b) sont formées sur toute la partie périphérique du substrat ; et en ce que la totalité de la surface des parties périphériques de la couche passe-bande et de la couche de coupure ondes courtes/grandes ondes est recouverte d'un masque (5a, 5b ; 5) formé d'un matériau réfléchissant les rayons infrarouges.

2. Filtre optique selon la revendication 1, dans lequel ledit masque (5) est formé s'étendant depuis la partie périphérique de la couche passe-bande (2) et de la couche de coupure ondes courtes/grandes ondes (3) jusqu'aux surfaces latérales du substrat (1).

3. Filtre optique selon la revendication 1 ou 2, dans lequel ledit masque (5a, 5b) est formé en déposant une couche protectrice (6b) au-dessus d'une couche (6a) d'un matériau réfléchissant les rayons infrarouges.

4. Filtre optique selon la revendication 3, dans lequel ladite couche protectrice (6b) est formée de Au et ledit matériau réfléchissant les rayons infrarouges est Cr.

5. Procédé de fabrication d'un filtre optique (7) possédant un substrat (1), une couche passe-bande (2) formée sur un côté dudit substrat et laissant passer une bande prédéterminée de longueurs d'onde de rayons infrarouges et une couche de coupure ondes courtes/grandes ondes (3) qui coupe une bande de courtes longueurs d'onde et une bande de grandes longueurs d'onde de rayons infrarouges formée sur l'autre côté dudit substrat, comprenant les étapes consistant à
a) former une pluralité de parties de couches passe-bande (2) sur un côté d'un matériau de substrat (10) avec des intervalles de coupure (11a) formés entre les parties respectives des couches passe-bande,
b) former une pluralité de parties de couches de coupure ondes courtes/grandes ondes (3) sur l'autre côté du matériau du substrat (10) avec des intervalles de coupure (11b) formés entre les parties respectives de couches de coupure ondes courtes/grandes ondes (3), lesdits intervalles de coupure (11a, 11b) sur les côtés opposés du matériau du substrat étant sensiblement en vis-à-vis l'un de l'autre,
c) couper ledit matériau de substrat dans les parties médianes desdits intervalles de coupure pour former une pluralité de filtres optiques, et
d) revêtir les parties de bord périphériques desdites couches de bande passante et desdites couches de coupure ondes courtes/grandes ondes d'un masque (5a, 5b ; 5) d'un matériau réfléchissant les rayons infrarouges.

6. Procédé selon la revendication 5, dans lequel des revêtements de vernis photosensible (8a, 8b) sont appliqués aux parties centrales de ladite couche passe-bande (2) et de la couche de coupure ondes courtes/grandes ondes (3) avant l'exécution de l'étape d) et dans lequel l'étape d) comprend une étape de revêtement de la totalité des surfaces sur les deux côtés du substrat (1) d'un matériau (9a, 9b ; 9) formant ledit masque, et une étape d'enlèvement desdits revêtements de vernis photosensible et du matériau de masque déposé sur ceux-ci au moyen d'un solvant.

7. Procédé selon la revendication 6, dans lequel une couche continue dudit matériau de masque (9) est appliquée aux deux surfaces principales et à toutes les surfaces latérales de l'élément de filtre optique au cours de ladite étape de revêtement.
